# EUROPEAN PATENT APPLICATION

(11) **EP 4 794 102 A1**
(43) Date of publication of application: **19.08.2026**
(21) Application number: 24925457.4
(22) Date of filing: 16.08.2024
(51) Int. Cl.: H01M 50/507

(54) **BATTERY, ELECTRIC DEVICE AND ENERGY STORAGE DEVICE**

(30) Priority: 22.02.2024 CN 202420325670 U
(71) Applicant: Contemporary Amperex Technology Co., Limited, Ningde, Fujian 352100 (CN)
(72) Inventor: WU, Kai, Ningde, Fujian 352100 (CN); SHEN, Dan, Ningde, Fujian 352100 (CN); YANG, Haiqi, Ningde, Fujian 352100 (CN); CHEN, Shilong, Ningde, Fujian 352100 (CN); LI, Yao, Ningde, Fujian 352100 (CN)
(74) Representative: Ran, Handong
(86) International application number: PCT/CN2024/112847
(87) International publication number: WO 2025/175715

(57) **Abstract**

A battery (10), an electric device and an energy storage device. The battery (10) comprises: a battery cell (20); a busbar component (12), wherein the busbar component (12) is used for electrically connect to an electrode terminal (214) of the battery cell (20); and an insulating component (13), the insulating component (13) comprising a main body portion (131) and an extending portion (132) that are connected to each other, wherein the main body portion (131) is attached to the surface of the busbar component (12) that is away from the battery cell (20), and the extending portion (132) is located at an end of the busbar component (12) that is close to the battery cell (20). The extending portion (132) is closer to a first surface relative to the main body portion (131), wherein the first surface is the surface of the battery cell (20) that is close to the electrode terminal (214). In this way, when thermal runaway occurs in the battery cell (20), the configuration of the insulating component (13) can reduce the impact of high-temperature gas and conductive particles which are released by the battery cell (20) on the busbar component (12), thereby reducing the influence on the performance of the busbar component (12), such that the usage performance of the battery (10) is improved.

## Description

### CROSS-REFERENCE TO RELATED APPLICATION

The present application claims priority to Chinese Patent Application No. 202420325670.X filed on February 22, 2024, and entitled "BATTERY, ELECTRIC DEVICE, AND ENERGY STORAGE DEVICE", the content of which is incorporated herein by reference in its entirety.

### TECHNICAL FIELD

Embodiments of the present application relate to the technical field of batteries, and in particular, to a battery, an electric device, and an energy storage device.

### BACKGROUND

With the increasing severity of environmental pollution, the new energy industry has attracted more and more attention. In the new energy industry, battery technology is an important factor in its development. In the development of battery technologies, in addition to improving the electrical performance of batteries, the safety issue is also a problem that cannot be ignored. If the safety of the battery cannot be ensured, the battery will be unusable, reducing the use performance of the battery.

Therefore, how to improve the use performance of the battery has become an urgent technical problem to be solved in the art.

### SUMMARY

In view of this, embodiments of the present application provide a battery, an electric device, and an energy storage device, which can enhance the use performance of the battery.

In a first aspect, a battery is provided. The battery includes: a battery cell; a busbar component, the busbar component being configured to be electrically connected to an electrode terminal of the battery cell; and an insulating component, the insulating component including a main body part and an extending part connected to each other, where the main body part is attached to a surface of the busbar component distal to the battery cell, and the extending part is located at an end part of the busbar component proximal to the battery cell; the extending part is closer to a first surface than the main body part, and the first surface is a surface of the battery cell proximal to the electrode terminal.

In the embodiments of the present application, the insulating component is configured to include a main body part and an extending part connected to each other; the main body part is attached to a surface of the busbar component distal to the battery cell, and the extending part is located at an end part of the busbar component proximal to the battery cell; the extending part is closer to a first surface than the main body part, and the first surface is a surface of the battery cell proximal to the electrode terminal. In this way, in the case of thermal runaway of the battery cell, through the configuration of the insulating component, the impact of high-temperature gas and conductive particles released from the battery cell on the busbar component can be reduced, thereby mitigating the influence on the performance of the busbar component and enhancing the use performance of the battery.

In some implementations, the extending part extends toward the surface of the battery cell proximal to the electrode terminal.

In the embodiments of the present application, by arranging the extending part to extend toward the surface of the battery cell proximal to the electrode terminal, in the case of thermal runaway of the battery cell, the impact of high-temperature gas and conductive particles released from the battery cell on the busbar component can be effectively reduced, thereby mitigating the influence on the performance of the busbar component and enhancing the use performance of the battery.

In some implementations, the extending part extends to the surface of the battery cell proximal to the electrode terminal. In this way, in the case of thermal runaway of the battery cell, the impact of high-temperature gas and conductive particles released from the battery cell on the busbar component can be further reduced, thereby mitigating the influence on the performance of the busbar component and enhancing the use performance of the battery.

In some implementations, the extending part includes a first extending part and a second extending part connected to each other; the first extending part is connected to one side of the main body part, the first extending part extends to the surface of the battery cell proximal to the electrode terminal, and the second extending part extends in a direction away from the electrode terminal.

In the embodiments of the present application, the extending part to is configured to include a first extending part and a second extending part connected to each other; the first extending part is connected to one side of the main body part, the first extending part extends to the surface of the battery cell proximal to the electrode terminal, and the second extending part extends in a direction away from the electrode terminal. In this way, in the case of thermal runaway of the battery cell, the impact of high-temperature gas and conductive particles released from the battery cell on the busbar component can be effectively reduced, thereby mitigating the influence on the performance of the busbar component and enhancing the use performance of the battery.

In some implementations, the second extending part is attached to the surface of the battery cell proximal to the electrode terminal. In this way, in the case of thermal runaway of the battery cell, the impact of high-temperature gas and conductive particles released from the battery cell on the busbar component can be effectively reduced, and meanwhile, the risk of short circuits or arcing between adjacent busbar components caused by contact with conductive particles can be effectively lowered, thereby mitigating the influence on the performance of the busbar component and enhancing the use performance of the battery.

In some implementations, the battery includes an adjacent first busbar component and second busbar component; a first insulating component corresponding to the first busbar component is adjacent to a second insulating component corresponding to the second busbar component, and a first sub-extending part of the first insulating component is connected to a second sub-extending part of the second insulating component.

In the embodiments of the present application, the battery includes an adjacent first busbar component and second busbar component; a first insulating component corresponding to the first busbar component is adjacent to a second insulating component corresponding to the second busbar component, and a first sub-extending part of the first insulating component is connected to a second sub-extending part of the second insulating component. In this way, in the case of thermal runaway of the battery cell, the risk of short circuits or arcing between adjacent busbar components caused by contact with conductive particles can be reduced, thereby mitigating the influence on the performance of the busbar component and enhancing the use performance of the battery.

In some implementations, the first insulating component and the second insulating component are integrally formed. In this way, in the embodiments of the present application, by integrally forming the first insulating component corresponding to the first busbar component and the second insulating component corresponding to the second busbar component, the processing and manufacturing efficiency of the insulating components mounted on the battery can be enhanced.

In some implementations, the extending part includes a third extending part and a fourth extending part connected to each other; the third extending part is connected to one side of the main body part, the third extending part extends toward the surface of the battery cell proximal to the electrode terminal, and the fourth extending part extends to a surface of the busbar component proximal to the battery cell.

In the embodiments of the present application, the extending part is configured to include a third extending part and a fourth extending part connected to each other; the third extending part is connected to one side of the main body part, the third extending part extends toward the surface of the battery cell proximal to the electrode terminal, and the fourth extending part extends to a surface of the busbar component proximal to the battery cell. In this way, in the case of thermal runaway of the battery cell, the impact of high-temperature gas and conductive particles released from the battery cell on the busbar component can be effectively reduced, thereby mitigating the influence on the performance of the busbar component and enhancing the use performance of the battery.

In some implementations, the fourth extending part is attached to the surface of the busbar component proximal to the battery cell. In this way, in the embodiments of the present application, in the case of thermal runaway of the battery cell, the impact of high-temperature gas and conductive particles released from the battery cell on the busbar component can be further reduced, thereby mitigating the influence on the performance of the busbar component and enhancing the use performance of the battery.

In some implementations, the material of the insulating component is one of the following materials: polyurethane, polyamide, polypropylene, silicone foam, polycarbonate, polyethylene terephthalate, mica, glass fiber, ceramic fiber, or polyethylene epoxy resin.

In the embodiments of the present application, by configuring the material of the insulating component to be one of the following materials: polyurethane, polyamide, polypropylene, silicone foam, polycarbonate, polyethylene terephthalate, mica, glass fiber, ceramic fiber, or polyethylene epoxy resin, the insulating property of the insulating component can be enhanced, thereby reducing the risk of short circuits or arcing between adjacent busbar components caused by contact with conductive particles, mitigating the influence on the performance of the busbar component, and thus enhancing the use performance of the battery.

In some implementations, the insulating component is adhesively connected to the busbar component. In this way, in the embodiments of the present application, by adhesively connecting the insulating component to the busbar component, the connection stability between the insulating component and the busbar component can be enhanced. In addition, this connection method is simple and efficient, facilitating the mounting of the insulating component.

In a second aspect, an electric device is provided. The electric device includes the battery according to any one of the implementations of the first aspect, and the battery is configured to supply electric energy to the electrical device.

In some implementations, the electric device may be a vehicle, a ship, a spacecraft, or the like.

In a third aspect, an energy storage device is provided. The energy storage device includes the battery according to any one of the implementations of the first aspect, and the battery is configured to store electric energy for the energy storage device.

### BRIEF DESCRIPTION OF THE DRAWINGS

To more clearly illustrate the technical solutions according to embodiments of the present application, the drawings required for illustrating the embodiments of the present application are briefly described below. Apparently, the drawings described below are merely some embodiments of the present application, and those of ordinary skill in the art may still derive other drawings from these drawings without creative efforts.
FIG. 1 is a schematic structural diagram of a vehicle according to an embodiment of the present application;
FIG. 2 is a schematic structural diagram of a battery according to an embodiment of the present application;
FIG. 3 is a schematic structural diagram of a battery cell according to an embodiment of the present application;
FIG. 4 is a schematic structural diagram of a battery according to another embodiment of the present application;
FIG. 5 is a schematic cross-sectional view of a battery according to an embodiment of the present application;
FIG. 6 is a schematic cross-sectional view of part of a battery according to another embodiment of the present application;
FIG. 7 is a schematic cross-sectional view of part of a battery according to another embodiment of the present application;
FIG. 8 is a schematic cross-sectional view of part of a battery according to another embodiment of the present application;
FIG. 9 is a schematic cross-sectional view of part of a battery according to another embodiment of the present application;
FIG. 10 is a schematic cross-sectional view of part of a battery according to another embodiment of the present application;

Description of reference numerals: 1-vehicle; 10-battery; 20-battery cell; 30-controller; 40-motor; 11-case; 21-shell; 22-electrode assembly; 211-housing; 212-cover plate; 213-pressure relief mechanism; 221a-first tab; 222a-second tab; 214-electrode terminal; 214a-positive electrode terminal; 214b-negative electrode terminal; 12-busbar component; 121-first busbar component; 122-second busbar component; 13-insulating component; 131-main body part; 132-extending part; 1321-first extending part; 1322-second extending part; 1323-third extending part; 1324-fourth extending part; 13a-first insulating component; 13b-second insulating component; 1322a-first sub-extending part; 1322b-second sub-extending part; 14-first support component; 15-second support component.

The drawings are not drawn to actual scale.

### DETAILED DESCRIPTION

Implementations of the present application are described in further detail with reference to the drawings and embodiments. The following detailed description of the embodiments and the drawings are used for the exemplary illustration of the principles of the present application, but are not intended to limit the scope of the present application. That is, the present application is not limited to the described embodiments.

In the description of the embodiments of the present application, it should be noted that, unless otherwise specified, "a plurality of" means two or more; the orientations or positional relationships indicated by the terms "upper", "lower", "left", "right", "inner", "outer", and the like are merely for the convenience of describing the present application and simplifying the description, rather than indicating or implying that the apparatus or element referred to must have a specific orientation or be configured and operated in the specific orientation, and thus should not be construed as limitations to the present application. Furthermore, the terms "first", "second", "third", and the like are used for descriptive purposes only and should not be construed as indicating or implying relative importance. The "perpendicular" is not strictly perpendicular but is within the allowable range of error. The "parallel" is not strictly parallel but is within the allowable range of error.

The following description is given with the directional terms as illustrated in the drawings and is not intended to limit the specific structure of the present application. In the description of the embodiments of the present application, it should further be noted that unless otherwise explicitly specified or defined, the terms "mount", "interconnect", and "connect" shall be construed broadly and may be, for example, fixed connection, detachable connection, or integral connection, or direct connection or indirect connection via an intermediate. For those of ordinary skill in the art, the specific meaning of the above terms in the embodiments of the present application may be interpreted according to the specific condition.

In the embodiments of the present application, the term "and/or" is merely a way to describe the association relationship between associated objects and indicates that there may be three possible relationships. For example, A and/or B may indicate that: only A is present, both A and B are present, and only B is present. In addition, the character "/" in the embodiments of the present application generally indicates an "or" relationship between the associated objects before and after the "/".

Unless otherwise defined, all technical and scientific terms used in the embodiments of the present application have the same meaning as commonly understood by those skilled in the art to which the present application belongs. The terms used in the specification of the embodiments of the present application are only used to describe specific embodiments and are not intended to limit the embodiments of the present application. The terms "include", "comprise", "have", "provided with", and any variants thereof in the specification and claims of the embodiments of the present application and the above description of the drawings are intended to cover a non-exclusive inclusion. The terms "first", "second", and the like in the specification and claims of the embodiments of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the described embodiments of the present application can be combined with other embodiments.

A battery in the embodiments of the present application refers to a physical module including one or more battery cells to supply electric energy. For example, the battery mentioned in the present application may include a battery module, a battery pack, or the like. The battery generally includes a case configured to encapsulate one or more battery cells. The case can reduce the influence of liquid or other foreign matter on the charging or discharging of the battery cells.

It should be understood that the battery cell in the embodiments of the present application includes, but is not limited to, a lithium-ion battery, a sodium-ion battery, a sodiumlithium-ion battery, a lithium metal battery, a sodium metal battery, a lithium-sulfur battery, a magnesium-ion battery, a nickel-hydrogen battery, a nickel-cadmium battery, a lead storage battery, and the like.

In some implementations, the battery cell generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some implementations, the positive electrode may be a positive electrode plate, and the positive electrode plate may include a positive electrode current collector and a positive electrode active material disposed on at least one surface of the positive electrode current collector.

As an example, the positive electrode current collector has two surfaces opposite to each other in its own thickness direction, and the positive electrode active material is disposed on either or both of the two opposite surfaces of the positive electrode current collector.

As an example, a metal foil or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be fabricated by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. In some implementations, other conventional materials that can be used as positive electrode active materials for batteries may also be used. These positive electrode active materials may be used alone or in combination of two or more. Examples of the lithium-containing phosphate may include, but are not limited to, at least one of lithium iron phosphate (such as LiFePO₄, also referred to as LFP), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

As an example, the positive electrode active material may include at least one of a sodium transition metal oxide, a polyanionic compound, and a Prussian blue compound.

In some implementations, the sodium transition metal oxide may be a sodium transition metal oxide modified by doping, and the doping modification of the sodium transition metal oxide may include at least one of sodium-site doping modification, oxygen-site doping modification, transition metal-site doping modification, and surface coating modification.

In some implementations, a foam metal may be used as the positive electrode. The foam metal may be foam nickel, foam copper, foam aluminum, foam alloy, foam carbon, or the like. When the foam metal is used as the positive electrode, the surface of the foam metal may not be provided with the positive electrode active material. Certainly, the positive electrode active material may also be provided. As an example, a lithium source material, a potassium metal, or a sodium metal may also be incorporated into and/or deposited in the foam metal; the lithium source material is a lithium metal and/or a lithium-rich material.

In some implementations, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The foam metal may be foam nickel, foam copper, foam aluminum, foam alloy, foam carbon, or the like. The composite current collector may be fabricated by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

In some implementations, the battery cell in the embodiments of the present application may be a negative electrode-free sodium secondary battery.

The negative electrode-free sodium secondary battery refers to a battery cell formed without actively disposing a negative electrode active material layer on the negative electrode side during the manufacturing of the battery cell. For example, during the manufacturing of the battery cell, a sodium metal or carbonaceous active material layer is not disposed at the negative electrode by processes of coating, deposition, or the like to form a negative electrode active material layer. During the first charge, sodium ions gain electrons at the positive electrode side and are deposited on the surface of the current collector to form a sodium metal phase. During discharge, the sodium metal can be converted into sodium ions and return to the positive electrode, thus achieving cyclic charge and discharge. Compared with other sodium secondary batteries, the negative electrode-free sodium secondary battery cell may have a higher energy density due to the lack of a negative electrode active material layer.

In some implementations, to improve the performance of the battery cell, functional coatings such as carbonaceous materials, metal oxides, or alloys may be disposed on the negative electrode side of the negative electrode-free sodium secondary battery, to enhance the conductivity of the negative electrode current collector and enhance the uniformity of the deposited sodium metal.

In some implementations, the material of the positive electrode current collector may be aluminum, and the material of the negative electrode current collector may be copper.

In some implementations, the electrode assembly further includes a separator. The separator is disposed between the positive electrode and the negative electrode.

In some implementations, the separator is a separation film. The embodiments of the present application do not particularly limit the type of the separation film, and any porousstructure separation film known to have good chemical stability and mechanical stability may be selected and used.

As an example, the main material of the separation film may be selected from at least one of glass fiber, non-woven fabric, polyethylene, polypropylene, polyvinylidene fluoride, and ceramic.

In some implementations, the separator is a solid-state electrolyte. The solid-state electrolyte is disposed between the positive electrode and the negative electrode, serving both to transport ions and to isolate the positive electrode and the negative electrode.

In some implementations, the battery cell further includes an electrolyte that serves to conduct ions between the positive electrode and the negative electrode. The embodiments of the present application do not specifically limit the type of electrolyte, which can be selected according to requirements. The electrolyte may be liquid-state, gel-state, or solid-state.

In some implementations, the electrode assembly may be of a wound structure. The positive electrode plate and the negative electrode plate are wound to form a wound structure.

In some implementations, the electrode assembly is of a stacked structure. As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate disposed between adjacent folded segments.

As an example, the positive electrode plate and the negative electrode plate are both folded to form a plurality of stacked folded segments.

As an example, a plurality of separators may be provided and are separately disposed between any adjacent positive electrode plates or negative electrode plates.

As an example, the separators may be provided continuously and are disposed between any adjacent positive electrode plates or negative electrode plates by means of folding or winding.

In some implementations, the shape of the electrode assembly may be cylindrical, flat, multi-prismatic, or the like.

In some implementations, the electrode assembly is provided with tabs that can conduct current out of the electrode assembly. The tabs include a positive electrode tab and a negative electrode tab.

In some implementations, the battery cell may include a shell. The shell is configured to encapsulate components such as electrode assemblies and electrolytes. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell of other shapes. The prismatic battery cell includes a square-housing battery cell, a blade-shaped battery cell, and a multi-prismatic battery, and the multi-prismatic battery is, for example, a hexagonal prismatic battery.

To meet different power requirements, the battery in the embodiments of the present application may include a plurality of battery cells. The plurality of battery cells may be connected in series, in parallel, or in series-parallel. The series-parallel connection refers to a combination of series connection and parallel connection. In some implementations, the plurality of battery cells may first be connected in series, in parallel, or in series-parallel to form a battery module, and then a plurality of battery modules are connected in series, in parallel, or in series-parallel to form a battery. That is, the plurality of battery cells may be directly assembled into a battery, or may be first assembled into battery modules, which are then assembled into a battery. The battery is further disposed in an electric device to supply electric energy to the electric device.

In some implementations, the battery in the embodiments of the present application may be a battery module, and when a plurality of battery cells are provided, the plurality of battery cells are arranged and fixed to form one battery module.

In some implementations, the battery in the embodiments of the present application may be a battery pack. The battery includes a case and a battery cell, and the battery cell or the battery module is accommodated in the case.

In some implementations, the case in the embodiments of the present application may be a part of the chassis structure of the vehicle. For example, a part of the case may become at least a part of the bottom plate of the vehicle, or a part of the case may become at least a part of a crossmember and a longitudinal member of the vehicle.

With the increasing severity of environmental pollution, the new energy industry has attracted more and more attention. In the new energy industry, battery technology is an important factor in its development. In the development of battery technologies, in addition to improving the electrical performance of batteries, the safety issue is also a problem that cannot be ignored. If the safety of the battery cannot be guaranteed, the battery will be unusable, reducing the use performance of the battery. Currently, during the operation of the battery, the electrode terminals of two adjacent battery cells are connected via a busbar component. In the case of thermal runaway of a battery cell, accompanied by high-speed jet of airflow, in one aspect, a large amount of airflow released through the pressure relief mechanism may impinge on the surface of the busbar component, potentially damaging the insulating layer on the surface of the busbar component and reducing its insulating property; in another aspect, conductive particles released through the pressure relief mechanism of the battery cell may fall between two adjacent busbar components, easily causing short-circuit arcing between the busbar components, resulting in degradation of the use performance of the battery. Therefore, how to improve the use performance of the battery has become an urgent technical problem to be solved in the art.

In view of this, the embodiments of the present application provide a battery. The battery includes: a battery cell; a busbar component, the busbar component being configured to be electrically connected to an electrode terminal of the battery cell; and an insulating component, the insulating component including a main body part and an extending part connected to each other, where the main body part is attached to a surface of the busbar component distal to the battery cell, and the extending part is located at an end part of the busbar component proximal to the battery cell; the extending part is closer to a first surface than the main body part, and the first surface is a surface of the battery cell proximal to the electrode terminal. In this way, in the embodiments of the present application, in the case of thermal runaway of the battery cell, through the configuration of the insulating component, the impact of high-temperature gas and conductive particles released from the battery cell on the busbar component can be effectively reduced, and meanwhile, the risk of short circuits or arcing between adjacent busbar components caused by contact with conductive particles can be lowered, thereby mitigating the influence on the performance of the busbar component and enhancing the use performance of the battery.

The technical solutions described in the embodiments of the present application are all suitable for various electric devices using batteries. For example, the electric device may be a vehicle, a mobile phone, a portable device, a laptop computer, a ship, a spacecraft, an electric toy, an electric tool, or the like. The vehicle may be a fuel vehicle, a gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes a metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer.

It should be understood that the technical solutions described in the embodiments of the present application are not only limited to being applicable to the electric device described above, but may also be applicable to any device using a battery. For the sake of brevity, the following embodiments are illustrated in detail using a vehicle as an example of an electric device.

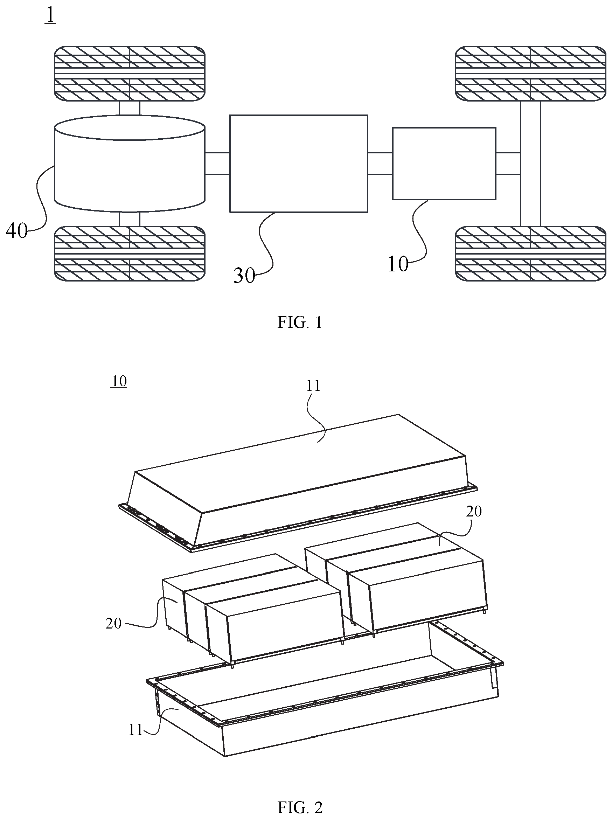

For example, as shown in FIG. 1, which is a schematic structural diagram of a vehicle 1 according to an embodiment of the present application. The vehicle 1 may be a fuel vehicle, a gas vehicle, or a new energy vehicle. The new energy vehicle may be a pure electric vehicle, a hybrid electric vehicle, or an extended-range vehicle. A motor 40, a controller 30, and a battery 10 may be disposed inside the vehicle 1. The controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may serve as an operation power source for the vehicle 1 and is used in the circuit system of the vehicle 1. In another example, the battery 10 may be configured to meet the operational power requirements of the vehicle 1 for starting, navigation, and driving. In some implementations of the present application, the battery 10 may not only serve as an operation power source for the vehicle 1, but also serve as a driving power source for the vehicle 1 to, replacing or partially replacing fuel or natural gas, provide driving power for the vehicle 1.

To meet different power usage requirements, the battery 10 in the embodiments of the present application may include at least one battery cell group. The battery cell group includes a plurality of battery cells, which may be electrically connected in series, in parallel, or in series-parallel to form the battery 10. The series-parallel connection refers to a combination of series connection and parallel connection. The battery 10 may also be referred to as a battery pack. For example, the plurality of battery cells may first be connected in series, in parallel, or in series-parallel to form a battery module, and then a plurality of battery modules are connected in series, in parallel, or in series-parallel to form the battery 10. That is, the plurality of battery cells may be directly assembled into the battery 10, or may be first assembled into battery modules, which are then assembled into the battery 10.

In some implementations, the battery 10 may include a plurality of battery cells 20. For example, as shown in FIG. 2, which is a schematic structural diagram of a battery 10 according to an embodiment of the present application, the battery 10 may include a plurality of battery cells 20. The battery 10 may further include a case 11, and the interior of the case 11 is a hollow structure. The plurality of battery cells 20 are accommodated in the case 11. For example, the plurality of battery cells 20, after being connected in parallel, in series, or in series-parallel, are disposed inside the case 11.

In the embodiments of the present application, based on different power requirements, the number of the battery cells 20 may be set to any numerical value. The plurality of battery cells 20 may be connected in series, in parallel, or in series-parallel to achieve a higher capacity or power. Since each battery 10 may include a large number of the battery cells 20, the battery cells 20 may be arranged in groups for ease of mounting, with each group of the battery cells 20 forming a battery module. The number of the battery cells 20 included in the battery module is not limited and may be set according to requirements. The battery 10 may include a plurality of battery modules. The plurality of battery modules may be connected in series, in parallel, or in series-parallel.

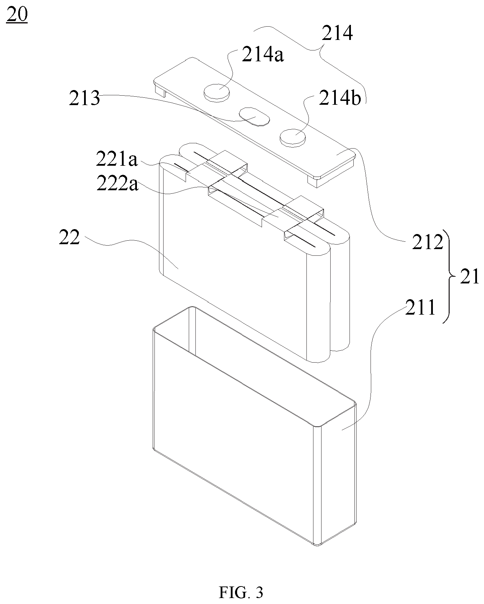

As shown in FIG. 3, which is a schematic structural diagram of a battery cell 20 according to an embodiment of the present application, the battery cell 20 includes one or more electrode assemblies 22, a housing 211, and a cover plate 212. The housing 211 and the cover plate 212 form a shell 21 or a battery box. The wall of the housing 211 and the wall of the cover plate 212 are both referred to as the walls of the battery cell 20. For a rectangular parallelepiped battery cell 20, the walls of the housing 211 include a bottom wall and four side walls. The housing 211 is determined according to the shape of one or more electrode assemblies 22 after combination, for example, the housing 211 may be a hollow rectangular parallelepiped, or a cube, or a cylinder, and one of the faces of the housing 211 is provided with an opening such that one or more electrode assemblies 22 can be placed in the housing 211. For example, when the housing 211 is a hollow rectangular parallelepiped or a cube, one of the planes of the housing 211 is an open plane, that is, the plane has no wall body such that the inside and the outside of the housing 211 communicate with each other. When the housing 211 is a hollow cylinder, an end surface of the housing 211 is an open plane; that is, the end surface has no wall body such that the inside and the outside of the housing 211 communicate with each other. The cover plate 212 covers the opening and is connected to the housing 211 to form a closed cavity in which the electrode assembly 22 is placed. The housing 211 is filled with an electrolyte, such as an electrolytic solution.

The battery cell 20 may further include two electrode terminals 214, and the two electrode terminals 214 may be disposed on the cover plate 212. The cover plate 212 is generally in the shape of a flat plate, the two electrode terminals 214 are fixed to the flat surface of the cover plate 212, and the two electrode terminals 214 are a positive electrode terminal 214a and a negative electrode terminal 214b, respectively. One connecting member, which may also be referred to as a current collecting member, is disposed corresponding to each electrode terminal 214. The connecting member is located between the cover plate 212 and the electrode assembly 22 and is configured to electrically connect the electrode assembly 22 to the electrode terminal 214.

As shown in FIG. 3, each electrode assembly 22 is provided with a first tab 221a and a second tab 222a. The first tab 221a and the second tab 222a have opposite polarities. For example, when the first tab 221a is a positive electrode tab, the second tab 222a is a negative electrode tab.

In the battery cell 20, according to actual use requirements, a single or a plurality of electrode assemblies 22 may be provided. As shown in FIG. 3, the battery cell 20 is provided with two independent electrode assemblies 22.

A pressure relief mechanism 213 may also be provided on the battery cell 20. The pressure relief mechanism 213 is configured to actuate and release internal pressure or temperature when the internal pressure or temperature of the battery cell 20 reaches a threshold.

The pressure relief mechanism 213 may be any suitable pressure relief structure. For example, the pressure relief mechanism 213 may be a temperature-sensitive pressure relief mechanism, which is configured to melt when the internal temperature of the battery cell 20 provided with the pressure relief mechanism 213 reaches a threshold; and/or, the pressure relief mechanism 213 may be a pressure-sensitive pressure relief mechanism, which is configured to rupture when the internal gas pressure of the battery cell 20 provided with the pressure relief mechanism 213 reaches a threshold.

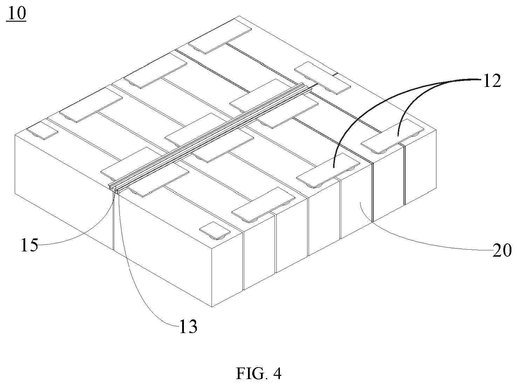

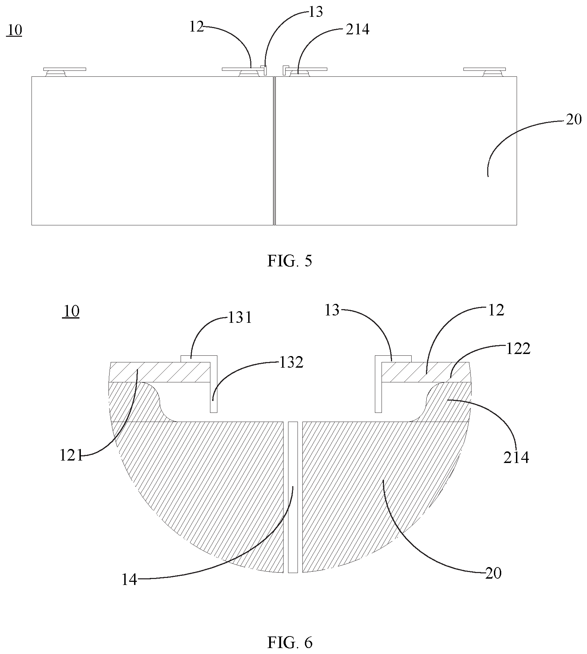

FIG. 4 shows a schematic structural diagram of a battery 10 according to another embodiment of the present application. FIG. 5 shows a schematic cross-sectional view of a battery 10 according to another embodiment of the present application. FIG. 6 shows a schematic cross-sectional view of part of a battery 10 according to another embodiment of the present application. Illustratively, FIG. 5 may be a schematic cross-sectional view of a corresponding part of the battery 10 in FIG. 4, and FIG. 6 may be an enlarged schematic cross-sectional view of the corresponding part of the battery 10 in FIG. 4 or FIG. 5.

In some implementations, as shown in FIGs. 4 to 6, the battery 10 includes a battery cell 20, a busbar component 12, and an insulating component 13. The busbar component 12 is configured to be electrically connected to an electrode terminal 214 of the battery cell 20. The insulating component 13 includes a main body part 131 and an extending part 132 connected to each other. The main body part 131 is attached to a surface of the busbar component 12 distal to the battery cell 20, and the extending part 132 is located at an end part of the busbar component 12 proximal to the battery cell 20. The extending part 132 is closer to a first surface than the main body part 131, and the first surface is a surface of the battery cell 20 proximal to the electrode terminal 214.

It should be understood that, as shown in FIGs. 4 to 6, the busbar component 12 in the battery 10 may be configured to achieve electrical connection among the plurality of battery cells 20, such as in parallel, in series, or in series-parallel connection. Specifically, the busbar component 12 may achieve electrical connection among the battery cells 20 by connecting to electrode terminals 214 of the battery cells 20. Further, the busbar component 12 may be fixed to the electrode terminals 214 of the battery cells 20 by welding. The electric energy of the plurality of battery cells 20 can be further conducted through a conductive mechanism passing through the case 11. Optionally, the conductive mechanism may also belong to the busbar component 12. Illustratively, in the embodiments of the present application, the busbar component 12 may be connected to the electrode terminal 214 of the battery cell 20 by laser welding, thereby enhancing the connection strength between the busbar component 12 and the electrode terminal 214 and reducing impurities between the busbar component 12 and the electrode terminal 214.

It should also be understood that, in the embodiments of the present application, the busbar component 12 may be configured to electrically connect spaced-apart or adjacent battery cells 20. In some implementations, one end of the busbar component 12 may be disposed at the output end of the battery 10, while the other end of the busbar component 12 is configured to be electrically connected to an external electric device.

It should also be understood that, in the embodiments of the present application, the shape of the electrode terminal 214 in the thickness direction perpendicular to the electrode terminal 214 may be configured according to actual requirements. For example, the shape of the electrode terminal 214 may include, but is not limited to, a circle, an ellipse, a rectangle, or a regular polygon.

It should also be understood that, in the embodiments of the present application, the extending part 132 being attached to the end part of the busbar component 12 proximal to the battery cell 20 may refer to the extending part 132 being located in a region defined between the busbar component 12, the electrode terminal 214, and the surface of the battery cell 20 proximal to the electrode terminal 214. By arranging the extending part 132 to be at the end part of the busbar component 12 proximal to the battery cell 20, the impact or damage to the busbar component 12 caused by high-temperature gas and conductive particles released from the battery cell 20 during thermal runaway of the battery cell 20 can be reduced.

It should also be understood that a first support component 14 may be provided between adjacent battery cells 20. The first support component 14 is configured to enhance the structural stability of the battery 10, thereby reducing movement or deformation of the battery cells 20 when subjected to vibration, impact, or other external forces.

It should also be understood that the main body part 131 and the extending part 132 of the insulating component 13 may be integrally formed, or the main body part 131 is adhesively connected to the extending part 132.

In the embodiments of the present application, the insulating component 13 is configured to include a main body part 131 and an extending part 132 connected to each other; the main body part 131 is attached to a surface of the busbar component 12 distal to the battery cell 20, and the extending part 132 is located at an end part of the busbar component 12 proximal to the battery cell 20; the extending part 132 is closer to a first surface than the main body part 131, and the first surface is a surface of the battery cell 20 proximal to the electrode terminal 214. In this way, in the case of thermal runaway of the battery cell 20, through the configuration of the insulating component 13, the impact of high-temperature gas and conductive particles released from the battery cell 20 on the busbar component 12 can be reduced, thereby mitigating the influence on the performance of the busbar component 12 and enhancing the use performance of the battery 10.

In some implementations, as shown in FIG. 6, the extending part 132 extends toward the surface of the battery cell 20 proximal to the electrode terminal 214. In this way, in the case of thermal runaway of the battery cell 20, the impact of high-temperature gas and conductive particles released from the battery cell 20 on the busbar component 12 can be further reduced, thereby mitigating the influence on the performance of the busbar component 12 and enhancing the use performance of the battery 10.

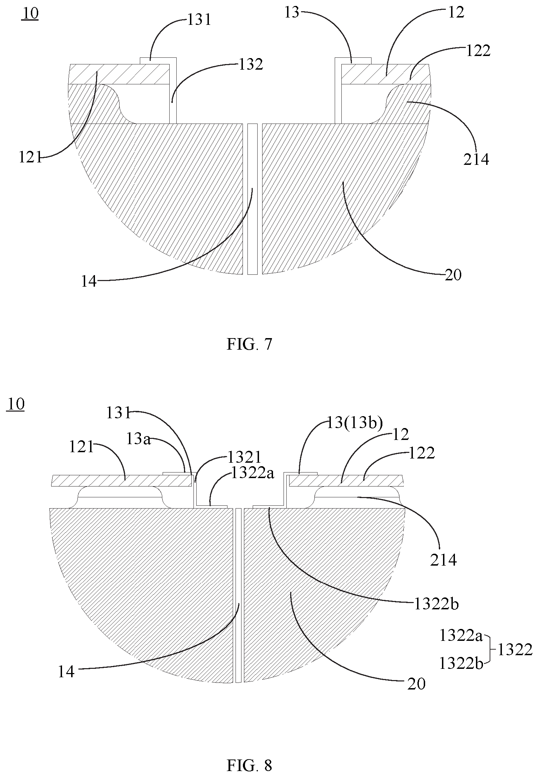

FIG. 7 shows a schematic cross-sectional view of part of a battery 10 according to another embodiment of the present application. In some implementations, as shown in FIG. 7, the extending part 132 extends to the surface of the battery cell 20 proximal to the electrode terminal 214. In this way, in the case of thermal runaway of the battery cell 20, the impact of high-temperature gas and conductive particles released from the battery cell 20 on the busbar component 12 can be further reduced, thereby mitigating the influence on the performance of the busbar component 12 and enhancing the use performance of the battery 10.

FIG. 8 shows a schematic cross-sectional view of part of a battery 10 according to another embodiment of the present application. In some implementations, as shown in FIG. 8, the extending part 132 includes a first extending part 1321 and a second extending part 1322 connected to each other. The first extending part 1321 is connected to one side of the main body part 131, the first extending part 1321 extends to the surface of the battery cell 20 proximal to the electrode terminal 214, and the second extending part 1322 extends in a direction away from the electrode terminal 214.

It should be understood that, in the embodiments of the present application, the first extending part 1321 and the second extending part 1322 of the extending part 132 may be integrally formed, or the first extending part 1321 is adhesively connected to the second extending part 1322.

In the embodiments of the present application, the extending part 132 is configured to include a first extending part 1321 and a second extending part 1322 connected to each other; the first extending part 1321 is connected to one side of the main body part 131, the first extending part 1321 extends to the surface of the battery cell 20 proximal to the electrode terminal 214, and the second extending part 1322 extends in a direction away from the electrode terminal 214. In this way, in the case of thermal runaway of the battery cell 20, the impact of high-temperature gas and conductive particles released from the battery cell 20 on the busbar component 12 can be effectively reduced, thereby mitigating the influence on the performance of the busbar component 12 and enhancing the use performance of the battery 10.

In some implementations, as shown in FIG. 8, the second extending part 1322 is attached to the surface of the battery cell 20 proximal to the electrode terminal 214. Illustratively, the second extending part 1322 may be adhesively connected to the surface of the battery cell 20 proximal to the electrode terminal 214.

In the embodiments of the present application, by arranging the second extending part 1322 to be attached to the surface of the battery cell 20 proximal to the electrode terminal 214, in the case of thermal runaway of the battery cell 20, the impact of high-temperature gas and conductive particles released from the battery cell 20 on the busbar component 12 can be effectively reduced, and meanwhile, the risk of short circuits or arcing between adjacent busbar components 12 caused by contact with conductive particles can be effectively lowered, thereby mitigating the influence on the performance of the busbar component 12 and enhancing the use performance of the battery 10.

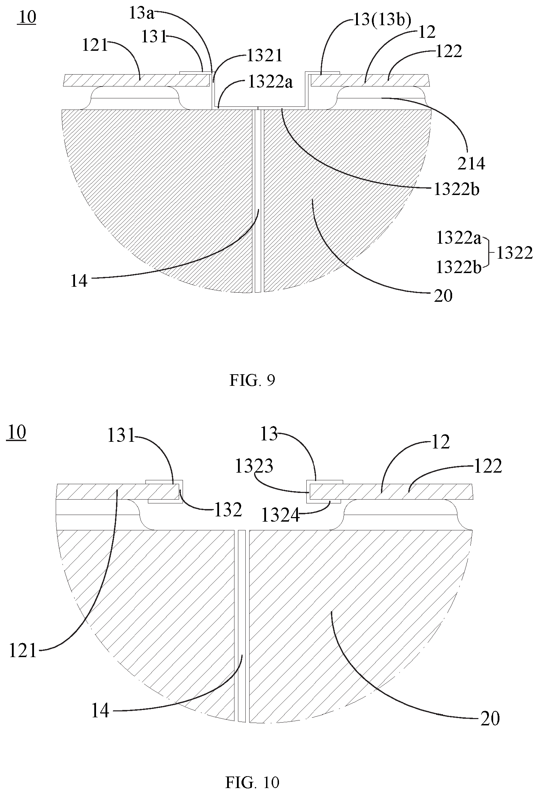

FIG. 9 shows a schematic cross-sectional view of part of a battery 10 according to another embodiment of the present application. In some implementations, as shown in FIG. 9, the battery 10 includes an adjacent first busbar component 121 and second busbar component 122. A first insulating component 13a corresponding to the first busbar component 121 is adjacent to a second insulating component 13b corresponding to the second busbar component 122, and a first sub-extending part 1322a of the first insulating component 13a is connected to a second sub-extending part 1322b of the second insulating component 13b.

It should be understood that, in the embodiments of the present application, the battery 10 further includes a second support component 15. The second support component 15 is disposed on the surfaces of the second extending parts 1322 of the first insulating component 13a and the second insulating component 13b that are distal to the battery cell 20, so as to limit and fix the first insulating component 13a and the second insulating component 13b, thereby enhancing the structural strength between the insulating components 13 and the second support component 15.

In the embodiments of the present application, the battery 10 includes an adjacent first busbar component 121 and second busbar component 122; a first insulating component 13a corresponding to the first busbar component 121 is adjacent to a second insulating component 13b corresponding to the second busbar component 122, and a first sub-extending part 1322a of the first insulating component 13a is connected to a second sub-extending part 1322b of the second insulating component 13b. In this way, in the case of thermal runaway of the battery cells 20, the risk of short circuits or arcing between adjacent busbar components 12 caused by contact with conductive particles can be reduced, thereby mitigating the influence on the performance of the busbar component 12 and enhancing the use performance of the battery 10.

In some implementations, the first insulating component 13a and the second insulating component 13b are integrally formed. In this way, in the embodiments of the present application, by integrally forming the first insulating component 13a corresponding to the first busbar component 121 and the second insulating component 13b corresponding to the second busbar component 122, the processing and manufacturing efficiency of the insulating components 13 mounted on the battery 10 can be enhanced.

It should be understood that, in the embodiments of the present application, the first insulating component 13a corresponding to the first busbar component 121 may further be adhesively connected to the second insulating component 13b corresponding to the second busbar component 122.

FIG. 10 shows a schematic cross-sectional view of part of a battery 10 according to another embodiment of the present application. In some implementations, as shown in FIG. 10, the extending part 132 includes a third extending part 1323 and a fourth extending part 1324 connected to each other. The third extending part 1323 is connected to one side of the main body part 131, the third extending part 1323 extends toward the surface of the battery cell 20 proximal to the electrode terminal 214, and the fourth extending part 1324 extends to a surface of the busbar component 12 proximal to the battery cell 20.

In the embodiments of the present application, the extending part 132 is configured to include a third extending part 1323 and a fourth extending part 1324 connected to each other; the third extending part 1323 is connected to one side of the main body part 131, the third extending part 1323 extends toward the surface of the battery cell 20 proximal to the electrode terminal 214, and the fourth extending part 1324 extends to a surface of the busbar component 12 proximal to the battery cell 20. In this way, in the case of thermal runaway of the battery cell 20, the impact of high-temperature gas and conductive particles released from the battery cell 20 on the busbar component 12 can be effectively reduced, thereby mitigating the influence on the performance of the busbar component 12 and enhancing the use performance of the battery 10.

In some implementations, the fourth extending part 1324 is attached to the surface of the busbar component 12 proximal to the battery cell 20. Illustratively, the fourth extending part 1324 is adhesively connected to the surface of the busbar component 12 proximal to the battery cell 20.

In the embodiments of the present application, by arranging the fourth extending part 1324 to be attached to the surface of the busbar component 12 proximal to the battery cell 20, in the case of thermal runaway of the battery cell 20, the impact of high-temperature gas and conductive particles released from the battery cell 20 on the busbar component can be further reduced, thereby mitigating the influence on the performance of the busbar component 12 and enhancing the use performance of the battery 10.

In some implementations, the material of the insulating component 13 includes at least one of the following materials: polyurethane, polyamide, polypropylene, silicone foam, polycarbonate, polyethylene terephthalate, mica, glass fiber, ceramic fiber, or polyethylene epoxy resin.

In the embodiments of the present application, by configuring the material of the insulating component 13 to include at least one of the following materials: polyurethane, polyamide, polypropylene, silicone foam, polycarbonate, polyethylene terephthalate, mica, glass fiber, ceramic fiber, or polyethylene epoxy resin, the insulating property of the insulating component 13 can be enhanced, thereby reducing the risk of short circuits or arcing between adjacent busbar components 12 caused by contact with conductive particles, mitigating the influence on the performance of the busbar component 12, and thus enhancing the use performance of the battery 10.

In some implementations, the insulating component 13 is adhesively connected to the busbar component 12. In this way, in the embodiments of the present application, by adhesively connecting the insulating component 13 to the busbar component 12, the connection stability between the insulating component 13 and the busbar component 12 can be enhanced. In addition, this connection method is simple and efficient, facilitating the mounting of the insulating component 13.

With continued reference to FIGs. 4 to 9 described above, a battery 10 is provided. The battery includes a battery cell 20, a busbar component 12, and an insulating component 13. The busbar component 12 is configured to be electrically connected to an electrode terminal 214 of the battery cell 20. The insulating component 13 includes a main body part 131 and an extending part 132 connected to each other. The main body part 131 is attached to a surface of the busbar component 12 distal to the battery cell 20, and the extending part 132 is located at an end part of the busbar component 12 proximal to the battery cell 20. The extending part 132 is closer to a first surface than the main body part 131, and the first surface is a surface of the battery cell 20 proximal to the electrode terminal 214. The extending part 132 includes a first extending part 1321 and a second extending part 1322 connected to each other. The first extending part 1321 is connected to one side of the main body part 131, and the first extending part 1321 extends to the surface of the battery cell 20 proximal to the electrode terminal 214. The second extending part 1322 extends in a direction away from the electrode terminal 214, and the second extending part 1322 is attached to the surface of the battery cell 20 proximal to the electrode terminal 214. The battery 10 includes an adjacent first busbar component 121 and second busbar component 122. A first insulating component 13a corresponding to the first busbar component 121 is adjacent to a second insulating component 13b corresponding to the second busbar component 122. A first sub-extending part 1322a of the first insulating component 13a is connected to a second sub-extending part 1322b of the second insulating component 13b.

The embodiments of the present application further provide an electric device. The electric device includes the battery 10 in any one of the above embodiments. The battery 10 is configured to supply electric energy to the electric device. Specifically, the electric device may be the vehicle 1 shown in FIG. 1, or may be any electric device using batteries 10.

The embodiments of the present application further provide an energy storage device. The energy storage device includes the battery 10 in any one of the above embodiments. The battery 10 is configured to store electric energy for the energy storage device.

Although the present application has been described with reference to the above embodiments, various modifications can be made and components can be replaced with equivalents without departing from the scope of the embodiments of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery, comprising:
a battery cell (20);
a busbar component (12), the busbar component (12) being configured to be electrically connected to an electrode terminal (214) of the battery cell (20); and
an insulating component (13), the insulating component (13) comprising a main body part (131) and an extending part (132) connected to each other, wherein the main body part (131) is attached to a surface of the busbar component (12) distal to the battery cell (20), and the extending part (132) is located at an end part of the busbar component (12) proximal to the battery cell (20) and is closer to a first surface than the main body part (131), wherein the first surface is a surface of the battery cell (20) proximal to the electrode terminal (214).

2. The battery according to claim 1, wherein the extending part (132) extends toward the surface of the battery cell (20) proximal to the electrode terminal (214).

3. The battery according to claim 2, wherein the extending part (132) extends to the surface of the battery cell (20) proximal to the electrode terminal (214).

4. The battery according to claim 2, wherein the extending part (132) comprises a first extending part (1321) and a second extending part (1322) connected to each other, wherein the first extending part (1321) is connected to one side of the main body part (131) and extends to the surface of the battery cell (20) proximal to the electrode terminal (214), and the second extending part (1322) extends in a direction away from the electrode terminal (214).

5. The battery according to claim 4, wherein the second extending part (1322) is attached to the surface of the battery cell (20) proximal to the electrode terminal (214).

6. The battery according to claim 4, wherein the battery comprises a first busbar component (121) and a second busbar component (122) that are adjacent to each other, wherein a first insulating component (13a) corresponding to the first busbar component (121) is adjacent to a second insulating component (13b) corresponding to the second busbar component (122), and a first sub-extending part (1322a) of the first insulating component (13a) is connected to a second sub-extending part (1322b) of the second insulating component (13b).

7. The battery according to claim 6, wherein the first insulating component (13a) and the second insulating component (13b) are integrally formed.

8. The battery according to claim 1, wherein the extending part (132) comprises a third extending part (1323) and a fourth extending part (1324) connected to each other, wherein the third extending part (1323) is connected to one side of the main body part (131) and extends toward the surface of the battery cell (20) proximal to the electrode terminal (214), and the fourth extending part (1324) extends to a surface of the busbar component (12) proximal to the battery cell (20).

9. The battery according to claim 8, wherein the fourth extending part (1324) is attached to the surface of the busbar component (12) proximal to the battery cell (20).

10. The battery according to any one of claims 1 to 9, wherein the insulating component (13) is made of a material selected from the group consisting of polyurethane, polyamide, polypropylene, silicone foam, polycarbonate, polyethylene terephthalate, mica, glass fiber, ceramic fiber, and polyethylene epoxy resin.

11. The battery according to any one of claims 1 to 10, wherein the insulating component (13) is adhesively connected to the busbar component (12).

12. An electric device, comprising the battery according to any one of claims 1 to 11, wherein the battery is configured to supply electric energy to the electric device.

13. An energy storage device, comprising the battery according to any one of claims 1 to 11, wherein the battery is configured to store electric energy for the energy storage device.
